# EUROPEAN PATENT APPLICATION

(11) **EP 4 239 766 A1**
(43) Date of publication of application: **06.09.2023**
(21) Application number: 23159680.0
(22) Date of filing: 02.03.2023
(51) Int. Cl.: H01M 50/204, H01M 50/271, H01M 50/289, H01M 50/30, H01M 50/507

(54) **BATTERY PACK**

(30) Priority: 04.03.2022 KR 20220028162; 26.12.2022 KR 20220184653
(71) Applicant: SK On Co., Ltd., Seoul 03161 (KR)
(72) Inventor: LEE, Seung Hun, 34124 Daejeon (KR); YOO, Tak Kyung, 34124 Daejeon (KR); CHOI, Yang Kyu, 34124 Daejeon (KR)
(74) Representative: Bird & Bird LLP

(57) **Abstract**

A battery pack includes at least one battery module; and a pack housing having an internal space in which the battery module is accommodated, wherein the at least one battery module includes a cell stack including a plurality of battery cells; and an upper cover covering an upper surface of the cell stack and coupled to the pack housing.

## Description

### BACKGROUND

### 1. FIELD

The present disclosure relates to a battery pack.

### 2. DESCRIPTION OF RELATED ART

A secondary battery (battery cell) may be conveniently charged and discharged differently from primary batteries, and has attracted attention as a power source of various mobile devices and electric vehicles. A battery module may be modularized by connecting a plurality of battery cells, and a battery pack may be configured as a high-capacity energy storage device by connecting a plurality of battery modules and/or battery cells. As energy capacity required for a battery pack has gradually increased, a plurality of battery modules may be disposed in the battery pack.

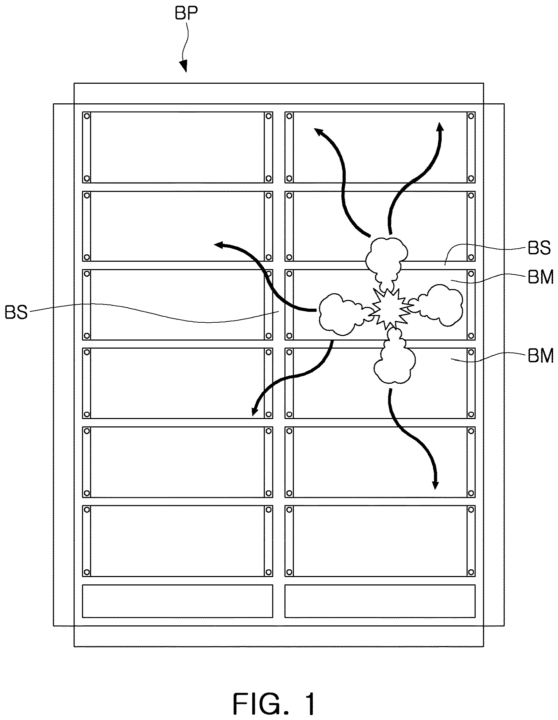

FIG. 1 is a diagram illustrating an internal region of a battery pack BP according to the prior art.

When the battery module BM receives a severe impact from the outside, or when severe charging and discharging are repeatedly performed, thermal runaway in which high-temperature gas or flame is generated in the battery module BM may occur.

As the thermal runaway phenomenon occurs, high-temperature gas or flame may be continuously emitted from the battery module BM into the battery pack BP. Such high-temperature gas or flame may flow over a partition structure BS disposed between the battery modules BM and may spread to other adjacent battery modules BM. Accordingly, other battery modules adjacent to the battery module BM in which thermal runaway has occurred may also be ignited in a chain, and such that there may be a risk in which thermal runaway of the battery pack BP may be accelerated.

To prevent such chain ignition, a battery pack battery pack which may block the transfer of gas or flame generated from one battery module to another adjacent battery module has been necessary.

### SUMMARY

An aspect of the present disclosure is to provide a battery pack which may prevent gas or flames from spreading to other adjacent battery modules in the event of thermal runaway.

According to an aspect of the present disclosure, a battery pack includes at least one battery module; and a pack housing having an internal space in which the battery module is accommodated, wherein the at least one battery module includes a cell stack including a plurality of battery cells; and an upper cover covering an upper surface of the cell stack and coupled to the pack housing.

The upper cover may include a body portion opposing the cell stack; and a flange portion connected to the body portion and coupled to the pack housing.

A step may be formed between the body portion and the flange portion.

The plurality of battery cells may be stacked in a first direction, and the flange portion may be connected to an end of the body portion in a second direction perpendicular to the first direction.

The pack housing may include a lower frame on which the at least one battery module is seated; an upper frame disposed above the upper cover and covering the internal space; and a cross frame disposed between the lower frame and the upper frame and having a venting passage formed therein.

The flange portion may be coupled to the cross frame.

The cell stack may oppose the lower frame in a state in which lower portions of the plurality of battery cells are exposed.

The at least one battery module may include a busbar assembly electrically connected to the cell stack and having a terminal unit disposed thereon; and a side cover opposing the busbar assembly and having a venting hole disposed therein, and the venting hole is configured to discharge gas generated from the cell stack.

The venting hole may oppose the cross frame.

The at least one battery module may further include a sensing unit disposed on the busbar assembly, and the upper cover may further include an opening through which the terminal portion and the sensing unit are exposed.

The battery pack may further include a shielding member coupled to an upper portion of the flange portion and covering the opening.

The battery pack may further include a fastening member penetrating through the shielding member and the flange portion and fastened to the cross frame.

The at least one battery module may include an end cover opposing at least one side of the cell stack, and the side cover may be coupled to an end of the end cover.

The upper cover may be coupled to the end cover and the side cover.

The pack housing may include a cross frame dividing the internal space into a plurality of accommodating spaces, and the upper cover is coupled to the cross frame and covering at least one of the plurality of accommodation spaces.

According to an aspect of the present disclosure, a battery pack includes a pack housing having a plurality of accommodation spaces; a plurality of cell stacks accommodated in the plurality of accommodation spaces, respectively, and including a plurality of battery cells stacked in a first direction; an upper cover covering at least one of the plurality of accommodation spaces, wherein the pack housing includes a lower frame in which the plurality of cell stacks are seated; and a cross frame connected to the lower frame and disposed between the plurality of accommodation spaces, and wherein the upper cover is coupled to the cross frame.

In the battery pack, a plurality of the upper covers may be provided and the number of upper covers may correspond to the number of cell stacks.

The battery pack may further include a busbar assembly electrically connected to the cell stack; a side cover opposing the busbar assembly; and an end cover opposing the cell stack in the first direction, wherein the side cover and the end cover are coupled to the upper cover.

The side cover may further include a venting hole through which gas generated from the cell stack is discharged, and The venting hole communicates with a venting passage formed along at least one surface of the cross frame.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a diagram illustrating an internal region of a battery pack according to the prior art;
FIG. 2 is an exploded perspective diagram illustrating a battery pack according to an example embodiment of the present disclosure;
FIG. 3 is an exploded perspective diagram illustrating a battery module accommodated in a battery pack according to an example embodiment of the present disclosure;
FIG. 4 is a perspective diagram illustrating an upper cover of a battery module according to an example embodiment of the present disclosure;
FIG. 5 is a diagram illustrating an example in which a battery module is accommodated in an accommodation space of a battery pack according to an example embodiment of the present disclosure;
FIG. 6 is a cross-sectional diagram taken along line I-I' in FIG. 2;
FIG. 7 is a diagram illustrating an example in which a shielding member is coupled to a pack housing according to an example embodiment of the present disclosure;
FIG. 8 is a cross-sectional diagram taken along line II-II' in FIG. 7; and
FIG. 9 is a diagram illustrating an internal region of a battery pack during thermal runaway according to an example embodiment of the present disclosure.

### DETAILED DESCRIPTION

Hereinafter, embodiments of the present disclosure will be described as follows with reference to the attached drawings.

The present disclosure may, however, be exemplified in many different forms and should not be construed as being limited to the specific embodiments set forth herein. Rather, these embodiments are provided such that this disclosure will be thorough and complete, and will fully convey the scope of the disclosure to those skilled in the art. Accordingly, shapes and sizes of the elements in the drawings may be exaggerated for clarity of description. Also, elements having the same function within the scope of the same concept represented in the drawing of each example embodiment will be described using the same reference numeral.

In the drawings, same elements will be indicated by same reference numerals. Overlapping descriptions and detailed descriptions of known functions and elements which may unnecessarily make the gist of the present disclosure obscure will not be provided. In the accompanying drawings, a portion of elements may be exaggerated, omitted or briefly illustrated, and the sizes of the elements may not necessarily reflect the actual sizes of these elements.

An expression used in the singular encompasses the expression of the plural, unless it has a clearly different meaning in the context. The terms, "include," "comprise," "is configured to," or the like of the description are used to indicate the presence of features, numbers, steps, operations, elements, portions or combination thereof, and do not exclude the possibilities of combination or addition of one or more features, numbers, steps, operations, elements, portions or combination thereof.

In example embodiments, terms such as an upper side, an upper portion, a lower side, a lower portion, a side surface, a front surface, a rear surface, or the like, are represented based on the directions in the drawings, and may be used differently if the direction of an element is changed.

The terms "first," "second," and the like may be used to distinguish one element from the other, and may not limit a sequence and/or an importance, or others, in relation to the elements. In a portion of cases, a first element may be referred to as a second element, and similarly, a second element may be referred to as a first element without departing from the scope of right in the example embodiments.

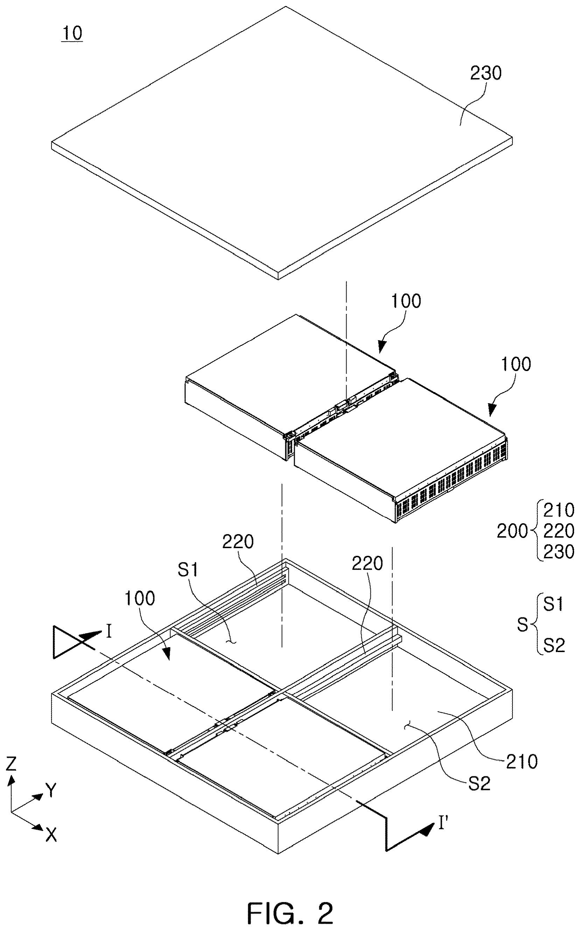

In the description below, a battery module and a battery pack including the same according to example embodiments will be described with reference to FIGS. 2 to 9.

FIG. 2 is an exploded perspective diagram illustrating a battery pack according to an example embodiment.

The battery pack 10 may include at least one battery module 100 and a pack housing 200 having an internal space S in which the battery module 100 is accommodated.

The internal space S of the pack housing 200 may be partitioned into a plurality of accommodation spaces S1 and S2. One or more battery modules 100 may be accommodated in each of the accommodation spaces S1 and S2.

For example, FIG. 2 illustrates a battery pack 10 in which a battery module 100 is accommodated in each of four accommodation spaces. However, this is merely an example, and the battery pack 10 may have three or less or five or more accommodation spaces. Also, two or more battery modules 100 may be accommodated in each of the accommodation spaces S1 and S2.

The pack housing 200 may include a lower frame 210 on which the battery module 100 is seated and a cross frame 220 coupled to the lower frame 210 and providing rigidity in the height direction of the pack housing 200.

The pack housing 200 may further include an upper frame 230 coupled to the cross frame 220 and covering the internal space S of the pack housing 200.

The lower frame 210 may form the lower surface of the pack housing 200. The lower frame 210 may be formed of a plate-shaped member having a seating surface on which a plurality of battery modules 100 are seated.

The cross frame 220 may be coupled to the lower frame 210. The cross frame 220 may extend from the upper surface of the lower frame 210 in a first direction (Y-axis direction) or a second direction (X-axis direction) and may partition the internal space S of the pack housing 200 into a plurality of accommodation spaces S1 and S2. The cross frame 220 may be configured to cover the side surface of the battery module 100 accommodated in each of the accommodation spaces S1 and S2.

Upper frame 230 may be coupled to the upper portion of the cross frame 220 may entirely cover the internal space S of the pack housing 200.

A venting passage V1 may be formed along at least one surface of the cross frame 220. Here, the venting passage V1 may refer to a passage through which gas or flame emitted from the battery module 100 flows. As the battery cells 111 included in the battery module 100 are charged and discharged under harsh conditions, flames or high-temperature gases may be generated from the battery cells 111. To smoothly discharge such flame or gas to the outside of the battery module 100, the battery module 100 may include one or more venting holes 131. Gas or flame discharged from the battery module 100 through the venting hole 131 to the internal space S of the pack housing 200 may flow along the venting passage V1, and may be discharged to the outside through the discharge port (not illustrated) disposed on the pack housing 200.. The discharge port (not illustrated) may be disposed on the front surface or rear surface of the pack housing 200, but the specific position thereof is not limited thereto.

The venting passage V1 may be formed along the flow path portion 221 of the cross frame 220. For example, the flow path portion 221 may be an empty space extending in the first direction (Y-axis direction) in the cross frame 220. Alternatively, the flow path portion 221 may be a space formed along one surface of the cross frame 220.

At least a portion of the pack housing 200 may be formed of a metal material having a predetermined degree of rigidity. For example, at least a portion of the lower frame 210 may include aluminum. When the lower frame 210 includes aluminum, the effect in which heat energy generated in the battery module 100 may be swiftly dissipated to the outside of the battery pack 10 due to excellent thermal conductivity of aluminum may not be obtained.

To increase the heat dissipation effect, the lower frame 210 may further include a heat dissipation member (not illustrated) or a cooling member (not illustrated). For example, a heat dissipation member (not illustrated) which may swiftly transfer thermal energy generated from the battery module 100 in the direction of the lower frame 210 may be disposed on the upper surface of the lower frame 210 on which the battery module 100 is seated.

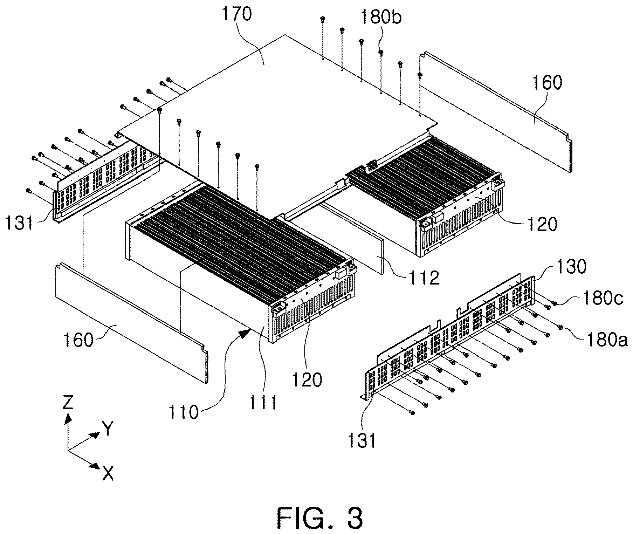

A plurality of battery modules 100 may be accommodated in the pack housing 200. Hereinafter, the battery module 100 included in the battery pack 10 will be described in greater detail with reference to FIGS. 3 to 6.

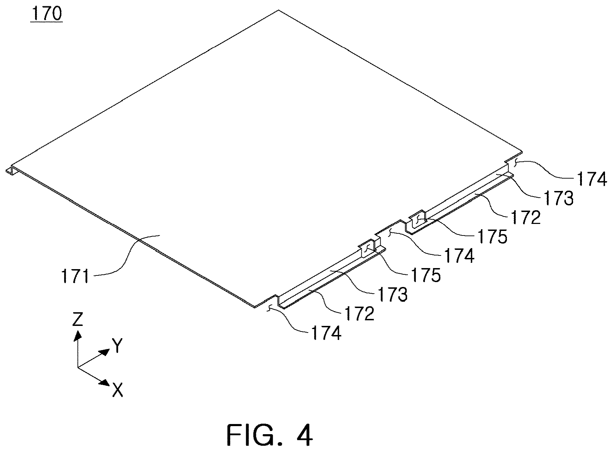

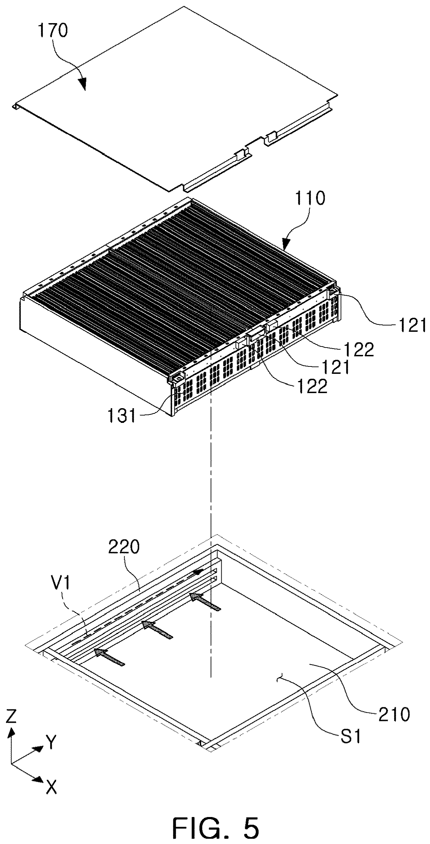

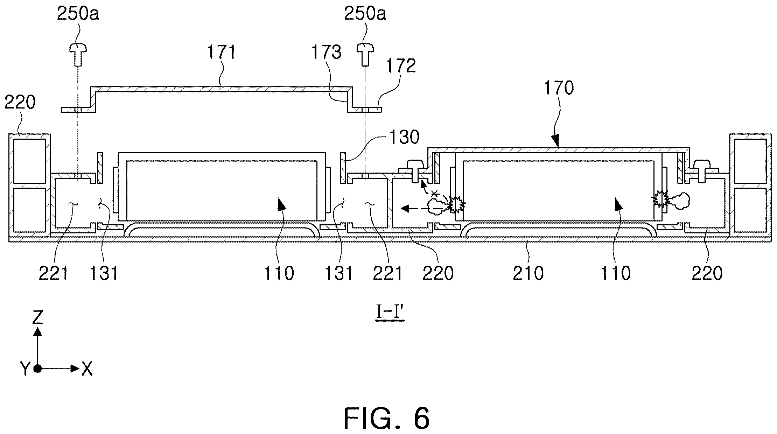

FIG. 3 is an exploded perspective diagram illustrating a battery module 100 accommodated in a battery pack 10 according to an example embodiment. FIG. 4 is a perspective diagram illustrating an upper cover 170 of a battery module 100 according to an example embodiment. FIG. 5 is a diagram illustrating an example in which a battery module 100 is accommodated in an accommodation space of a battery pack 10 according to an example embodiment. FIG. 6 is a cross-sectional diagram taken along line I-I' in FIG. 2.

Since the battery module 100 and the battery pack 10 described with reference to FIGS. 3 and 6 correspond to the battery module 100 and the battery pack 10 described in the aforementioned example embodiment with reference to FIG. 2, overlapping descriptions will not be provided.

The battery module 100 may be accommodated in the accommodation space S1 and S2 of the pack housing 200. In the battery pack 10, a plurality of accommodation spaces S1 and S2 may be provided, and one or more battery modules 100 may be accommodated in each of the accommodation spaces S1 and S2.

At least one of the plurality of battery modules 100 may include a cell stack 110 including a plurality of battery cells 111 stacked in a first direction (Y-axis direction), a busbar assembly 120 electrically connected to the cell stack 110, and a side cover 130 covering the busbar assembly 120.

The cell stack 110 may include a plurality of battery cells 111 electrically connected to each other.

The battery cell 111 included in the cell stack 110 may be a pouch-type secondary battery having a structure in which an electrode assembly (not illustrated) is stored in a pouch. In a pouch-type secondary battery, an electrode assembly (not illustrated) and an electrolyte solution (not illustrated) may be accommodated in a pouch formed by forming a sheet of or a plurality of exterior materials.

However, the battery cell 111 is not limited to a pouch-type secondary battery. For example, the battery cell 111 may be formed as a prismatic can-type secondary battery. Alternatively, the battery cell 111 may be formed by grouping a plurality of pouch-type secondary batteries in a bundle.

The plurality of battery cells 111 may be stacked in a first direction (Y-axis direction) and may form at least a portion of the cell stack 110.

The cell stack 110 may further include a protective member 112 for protecting the battery cells 111. For example, the protective member 112 may be a thermal insulating member disposed between the battery cells 111 and blocking heat from spreading between the battery cells 111. Alternatively, the protective member 112 may be a compressible member which may oppose the battery cell 111 and may provide surface pressure to the battery cell 111. Alternatively, the protective member 112 may simultaneously block heat and may provide surface pressure by combining a thermal insulating member and a compressible member.

The battery module 100 may include a busbar assembly 120 electrically connected to the battery cells 111 of the cell stack 110.

The busbar assembly 120 may oppose at least one side of the cell stack 110. For example, referring to FIG. 3, the busbar assembly 120 may be disposed to oppose the cell stack 110 in a second direction (X-axis direction). Here, the second direction (X-axis direction) may be a direction perpendicular to the first direction (Y-axis direction) which may be the stacking direction of the battery cells 111.

The busbar assembly 120 may include a conductive busbar, may be disposed on at least one side of the cell stack 110 and may electrically connect the battery cells 111 to each other. A pair of busbar assemblies 120 may be provided and disposed on both sides of the cell stack 110, respectively. However, the pair of busbar assemblies 120 may be connected to each other and may form a single component.

A plurality of terminal portions 121 may be disposed in the busbar assembly 120. The terminal portion 121 may be electrically connected to at least one of the conductive busbars and may be exposed to the outside of the battery module 100. The battery cells 111 of the cell stack 110 may be electrically connected to an external entity of the battery module 100 through the terminal portion 121.

A sensing unit 122 for sensing thermal and electrical states of the cell stack 110 and transmitting signals to and receiving signals from an external entity of the battery module 100 may be disposed in the busbar assembly 120. The sensing unit 122 may be disposed on one surface of the busbar assembly 120. The sensing unit 122 may be configured to transmit information such as temperature or voltage values of the battery cells 111 of the cell stack 110 to an external entity of the battery module 100 or to receive signals from an external entity of the battery module 100. Similarly to the terminal portion 121, the sensing unit 122 may be exposed to the outside of the battery module 100 and may be connected to an electric circuit outside the battery module 100.

In the battery module 100, a side cover 130 may be disposed on the outermost region of the side on which the busbar assembly 120 is disposed. The side cover 130 may include a rigid material (for example, a metal such as aluminum or a resin compound) and may protect the cell stack 110 and the busbar assembly 120 from external impact.

The side cover 130 may oppose the busbar assembly 120 and may cover the busbar assembly 120.

To prevent the side cover 130 and the busbar assembly 120 from being electrically shorted, an insulating cover (not illustrated) including an insulating material may be disposed between the side cover 130 and the busbar assembly 120.

A venting hole 131 through which gas or flame generated from the cell stack 110 may be discharged may be disposed in the side cover 130. The venting holes 131 may be disposed side by side in the length direction of the side cover 130.

The venting hole 131 of the side cover 130 may oppose the cross frame 220 of the pack housing 200. For example, the venting hole 131 may oppose the cross frame 220 in a second direction (X-axis direction).

The venting hole 131 may communicate with the venting passage V1 formed in the cross frame 220. Accordingly, gas or flame generated in the battery module 100 and discharged through the venting hole 131 may flow into the venting passage V1 of the pack housing 200.

A blocking member (not illustrated) for blocking gas or flame from flowing into the cell stack 110 from outside the battery module 100 may be disposed between the side cover 130 and the busbar assembly 120. For example, the blocking member (not illustrated) may include an insulating and heat-resistant material such as ceramic wool, and may block high-temperature gas or flame from flowing in from the outside of the battery module 100.

The battery module 100 may further include an end cover 160 opposing at least one side of the cell stack 110. The end cover 160 may include a material having rigidity (e.g., a metal such as aluminum or a resin compound) and may protect the cell stack 110 from external impact.

The end cover 160 may be disposed to oppose the cell stack 110, and may apply surface pressure to the cell stack 110. For example, the end cover 160 may oppose the battery cell 111 in a first direction (Y-axis direction), which is the stacking direction of the battery cell 111, and may apply surface pressure to the battery cell 111.

The end covers 160 may be provided in a pair to cover different surfaces of the cell stack 110. In this case, the cell stack 110 may be disposed between a pair of end covers 160. The pair of end covers 160 may be combined with the side covers 130, may form side surfaces of the battery module 100 and may protect the cell stack 110 from the external environment.

The end cover 160 may oppose the cell stack 110 in a different direction from the side cover 130. For example, as illustrated in FIG. 3, the end cover 160 may oppose the cell stack 110 in a first direction (Y-axis direction), and the side cover 130 may be disposed to oppose the cell stack 110 in a second direction (X-axis direction) with the busbar assembly 120 interposed therebetween. Accordingly, the pair of side covers 130 and the pair of end covers 160 may form four side surfaces of the battery module 100.

Both ends of the side cover 130 may be combined with the end cover 160. A fastening member 180a may be used to combine the end cover 160 and the side cover 130. For example, a plurality of fastening members 180a may penetrate through the side cover 130 and may be fastened to the end cover 160, and accordingly, the end cover 160 and the side cover 130 may be fixed to each other. However, the coupling method of the end cover 160 and the side cover 130 is not limited to the above example. For example, the end cover 160 may be coupled to the side cover 130 by welding.

The battery module 100 may further include an upper cover 170 covering an upper portion of the cell stack 110. In the description below, "upper portion" or "upward direction" may refer to a positive Z-axis direction.

The upper cover 170 of the battery module 100 may be coupled to the pack housing 200 and may cover the individual accommodation spaces S1 and S2 of the pack housing 200.

The upper cover 170 may include a body portion 171 opposing the cell stack 110 and a flange portion 172 connected to the body portion 171 and coupled to the pack housing 200.

The body portion 171 of the upper cover 170 may oppose the cell stack 110 in a third direction (Z-axis direction). In this case, the third direction (Z-axis direction) may be the height direction of the battery pack 10 and may be perpendicular to both the first direction (Y-axis direction) and the second direction (X-axis direction).

A heat insulation member (not illustrated) may be disposed between the body portion 171 and the cell stack 110 to block heat transfer in an upward direction of the cell stack 110. For example, the heat insulation member (not illustrated) may include a material having heat resistance or heat insulation such as mica, ceramic wool, and aerogel, and may block high-temperature thermal energy from spreading in the upward direction of the cell stack 110.

The flange portion 172 may be disposed on an edge of the body portion 171. For example, the flange portion 172 may be configured to be connected to an end of the body portion 171 in the second direction (X-axis direction).

A step 173 may be formed between the flange portion 172 and the body portion 171. For example, the flange portion 172 may be disposed more adjacent to the lower frame 210 than the body portion 171, and the step 173 connecting the flange portion 172 to the body portion 171 may be formed. At least a portion of the step 173 may oppose the side cover 130 in the second direction (X-axis direction).

The upper cover 170 may be coupled to the end cover 160 and the side cover 130, respectively. For example, in the upper cover 170, an edge of the body portion 171 in the first direction (Y-axis direction) may be coupled to the end cover 160 through a fastening member 180b. Also, the step 173 may be coupled to the side cover 130 through a fastening member 180c. However, the coupling structure between the upper cover 170, the end cover 160, and the side cover 130 is not limited to the above example, and any method may be used as along as the upper cover 170, the end cover 160, and the side cover 130 may be fixed to each other. For example, the upper cover 170 may be welded to the end cover 160 and the side cover 130.

The flange portion 172 may be coupled to the cross frame 220. For example, the fastening member 250a may penetrate through the flange portion 172 and may be fastened to the cross frame 220, and accordingly, the flange portion 172 and the cross frame 220 may be coupled to each other. In this case, as illustrated in FIG. 6, the fastening member 250a may penetrate through the flange portion 172 in the third direction (Z-axis direction) and may be fastened to the upper surface of the cross frame 220. However, the method of coupling the flange portion 172 to the cross frame 220 is not limited to the example illustrated in the drawings. For example, the flange portion 172 and the cross frame 220 may be bonded to each other by laser welding.

The flange portion 172 may oppose and may be in contact with the cross frame 220. For example, at least a portion of the flange portion 172 may be configured to be parallel to at least one side of the cross frame 220 such that the flange portion 172 and the cross frame 220 may be in surface-contact with each other. By the surface-contact structure, as the flange portion 172 is coupled to the cross frame 220, the flange portion 172 and the cross frame 220 may be in close contact with each other such that gas or flames may not escape therethrough.

While the flange portion 172 is coupled to the cross frame 220, the venting hole 131 of the battery module 100 may oppose the cross frame 220. For example, as illustrated in FIG. 6, the venting hole 131 of the battery module 100 may oppose the flow path portion 221 of the cross frame 220 and the venting passage V1 formed along the flow path portion 221 in the first direction (Y-axis direction) in the second direction (X-axis direction). The upper cover 170 may cover a gap between the venting hole 131 and the flow path portion 221 opposing each other, and may guide gas or flame discharged from the venting hole 131 to flow smoothly into the flow path portion 221. Accordingly, gas or flames discharged from the venting hole 131 may flow through the venting passage V1 formed along the flow path portion 221.

The upper cover 170 may cover one of the accommodation space S1 and S2 and the accommodation space may become a compartment. That is, the accommodation space S1 and S2, covered by the upper cover 170, may communicate with the flow path portion 221 of the cross frame 220, and gas or flame may be prevented from escaping through the region between the upper cover 170 and the cross frame 220. Accordingly, the upper cover 170 may block gas or flame from the battery module 100 flowing over to the cross frame 220 to the adjacent accommodation spaces S1 and S2.

That is, in a general battery module (BM in FIG. 1) and a general battery pack (BP in FIG. 1), gas or flame generated from the battery module (BM in FIG. 1) may flow over the space in which the battery module (BM in FIG. 1) is accommodated and may easily spread to another adjacent battery module (BM in FIG. 1), but in the battery pack 10 according to the example embodiment, the upper cover 170 of the battery module 100 may cover the accommodation spaces S1 and S2 and may block gas or flame from spreading.

As gas or flame in an accommodation space S1 and S2 is blocked from flowing over the cross frame 220 by the upper cover 170, gas or flame may smoothly flowing into the venting passage V1. Thereafter, gas or flame may flow along the venting passage V1 and may be discharged to the outside of the battery pack 10 through the discharge port (not illustrated) of the pack housing 200.

The battery module 100 and the battery pack 10 according to the example embodiments may form the space in which the module 100 is accommodated as a compartment using the upper cover 170 of the battery module 100 without a separate closed member covering the upper portion of the battery module 100.

Also, as the upper cover 170 combined with the structure of the battery module 100 (e.g., the end cover 160 and the side cover 130) is combined with the cross frame 220, structural stability of the battery pack 10 may further increase.

Accordingly, the battery pack 10 according to the example embodiments may have a simplified and stable structure, and simultaneously, the battery pack 10 may have a structure for isolating the accommodation spaces S1 and S2 in which the battery module 100 is accommodated from each other.

The lower surface of the battery module 100 may be configured to expose the cell stack 110. For example, in the battery module 100, the side surface of the cell stack 110 may be covered by the side cover 130 and the end cover 160, the upper surface of the cell stack 110 may be covered by the upper cover 170, and a cover member for covering the lower surface of the cell stack 110 may not be provided.

Accordingly, the battery cell 111 of the cell stack 110 may be exposed in the downward direction of the battery module 100. In the description below, "downward direction" may refer to the negative Z-axis direction. By including the structure, the battery cell 111 of the cell stack 110 may be directly exposed to an external entity of the battery module 100. For example, the battery cell 111 may oppose the lower frame 210 of the pack housing 200 while the lower portion thereof is exposed. Alternatively, the battery cell 111 may oppose the heat dissipation member (not illustrated) disposed in the upper surface of the lower frame 210 while the lower portion thereof is exposed. Accordingly, discharging of heat may be performed smoothly in the downward direction from the cell stack 110, thereby increasing heat dissipation efficiency of the battery module 100.

The openings 174 and 175 may be formed in the upper cover 170 of the battery module 100. For example, as illustrated in FIGS. 4 and 5, openings 174 and 175 which may be holes or avoidance structures formed in positions corresponding to the terminal portion 121 and the sensing unit 122 may be disposed in the upper cover 170. The openings 174 and 175 may include a first opening 174 through which the terminal portion 121 is exposed and a second opening 175 through which the sensing unit 122 is exposed.

The terminal portion 121 and the sensing unit 122 of the battery module 100 may be exposed to the outside of the battery module 100 through the first opening 174 and the second opening 175. The battery pack 10 may further include a shielding member covering the openings 174 and 175 of the upper cover 170 such that gas or flame from the battery module 100 may not escape over the upper cover 170 through the openings 174 and 175.

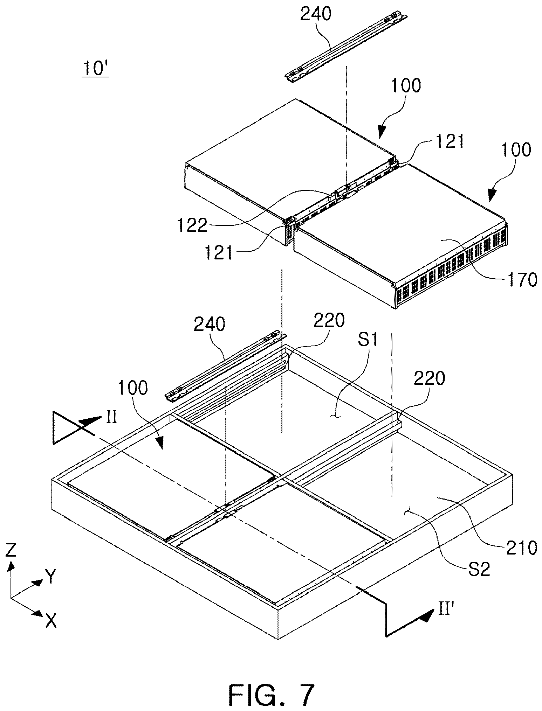

Hereinafter, the battery pack 10 further including the shielding member will be described with reference to FIGS. 7 to 9.

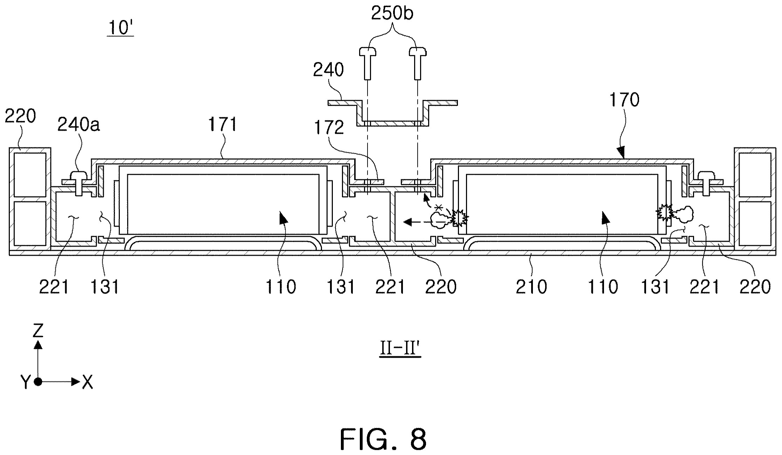

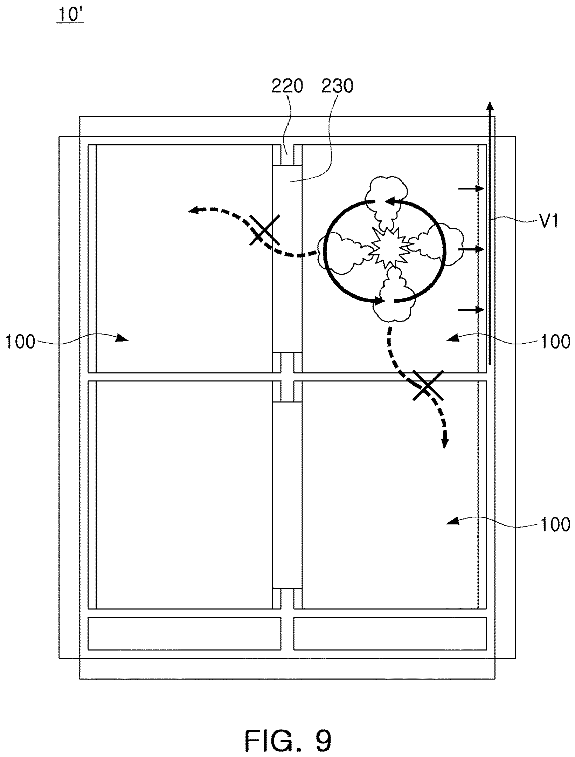

FIG. 7 is a diagram illustrating an example in which a shielding member 240 is coupled to a pack housing 200 according to an example embodiment. FIG. 8 is a cross-sectional diagram taken along line II-II' in FIG. 7. FIG. 9 is a diagram illustrating an internal region of a battery pack during thermal runaway according to an example embodiment.

The battery module 100 and battery pack 10' described with reference to FIGS. 7 to 9 may be different from the battery module 100 and battery pack 10 described with reference to FIGS. 1 to 6 in that the battery module 100 and battery pack 10' may further include a shielding member 240. Accordingly, in the battery pack 10' in FIGS. 7 to 9, the other components other than the shielding member 240 may correspond to the components of the battery pack 10 described with reference to FIGS. 1 to 6, and thus, overlapping description may not be provided. For example, the structure of the battery module 100 and the structure of the pack housing 200 may refer to the descriptions described with reference to FIGS. 1 to 6.

The battery pack 10' may further include a shielding member 240 coupled to the upper cover 170 and improving sealing of the accommodation spaces S1 and S2 in which the battery module 100 is accommodated.

The shielding member 240 may extend in a direction parallel to the length direction of the cross frame 220, that is, in a first direction (Y-axis direction).

At least a portion of the shielding member 240 may be disposed to oppose the flange portion 172 of the upper cover 170 in a third direction (Z-axis direction).

The shielding member 240 may be coupled to the flange portion 172 of the upper cover 170. For example, as illustrated in FIG. 8, the fastening member 250b may penetrate through the shielding member 240 and the flange portion 172 in order and may be fastened to the cross frame 220.

The shielding member 240 may be formed to have a step corresponding to the shape of step of the upper cover 170. Accordingly, the shielding member 240 may be closely coupled to the upper cover 170.

The shielding member 240 may be coupled to the flange portion 172 and may cover the openings 174 and 175 of the upper cover 170. The shielding member 240 may block gas or flame generated from the battery module 100 from escaping through the openings 174 and 175.

One of the shielding members 240 may be configured to cover both the openings 174 and 175 of the two battery modules 100 disposed in the second direction (X-axis direction). For example, referring to FIG. 7, in a battery pack 10' in which a plurality of battery modules 100 are accommodated, the terminal portion 121 and the sensing unit 122 of each battery module 100 may be aligned so as to be adjacent to the cross frame 220 disposed in the middle region of the pack housing 200. Here, one of the shielding members 240 may be disposed between the two battery modules 100 spaced apart from each other in the second direction (X-axis direction) and may be coupled to the upper cover 170 of the two battery modules 100. Accordingly, the shielding member 240 may cover both the openings 174 and 175 of the upper covers 170 of the two battery modules 100.

However, the shape of the shielding member 240 illustrated in FIGS. 7 to 9 is merely an example, and the specific shape of the shielding member 240 is not limited thereto. For example, differently from FIG. 8, the shielding member 240 may be configured to correspond to each of the battery modules 100 and may be coupled only to the upper cover 170 of one battery module 100. That is, the shielding member 240 may have any structure which may be coupled to the upper cover 170 and may cover the openings 174 and 175 of the upper cover 170.

Although not illustrated in the drawings, a sensing connection line (not illustrated) electrically connecting the sensing units 122 mounted on each battery module 100 may extend in a first direction (Y-axis direction) between the shielding member 240 and the flange portion 172.

As the shielding member 240 is disposed, gas or flame generated from one of the accommodation spaces S1 and S2 may be prevented from being escaping through the region between the upper cover 170 and the cross frame 220 and flowing over to the adjacent accommodation spaces S1 and S2.

Accordingly, as illustrated in FIG. 9, gas or flame generated from one of the accommodation spaces S1 and S2 in which the battery module 100 is accommodated may be blocked by the upper cover 170 and the shielding member 240 of the battery module 100 and may not spread to other adjacent accommodation spaces S1 and S2.

As described above, the battery module 100 may include an upper cover 170 coupled to the pack housing 200 and a shielding member 240 coupled to the upper cover 170, and gas or flame generated from one of the battery modules 100 may be prevented from spreading to another adjacent battery module 100.

Accordingly, gas or flame discharged from the battery module 100 may flow along the venting passage V1 provided in the pack housing 200 and may be safely discharged to the outside of the pack housing 200.

According to the aforementioned example embodiments, since the battery pack may block gas or flame from spreading to other adjacent battery modules during thermal runaway and may induce gas or flame to flow through the venting passage of the pack housing, stability of the battery pack may be increased.

While the example embodiments have been illustrated and described above, it will be apparent to those skilled in the art that modifications and variations could be made without departing from the scope of the present disclosure as defined by the appended claims.

## Claims

1. A battery pack, comprising:
at least one battery module; and
a pack housing having an internal space in which the battery module is accommodated,
wherein the at least one battery module includes:
a cell stack including a plurality of battery cells; and
an upper cover covering an upper surface of the cell stack and coupled to the pack housing.

2. The battery pack of claim 1, wherein the upper cover includes:
a body portion opposing the cell stack; and
a flange portion connected to the body portion and coupled to the pack housing.

3. The battery pack of claim 2, wherein a step is formed between the body portion and the flange portion.

4. The battery pack of any of claims 2 or 3,
wherein the plurality of battery cells are stacked in a first direction, and
wherein the flange portion is connected to an end of the body portion in a second direction perpendicular to the first direction.

5. The battery pack of any of claims 2 to 4,
wherein the pack housing includes:
a lower frame on which the at least one battery module is seated;
an upper frame disposed above the upper cover and covering the internal space; and
a cross frame disposed between the lower frame and the upper frame and having a venting passage formed therein.

6. The battery pack of claim 5, wherein the flange portion is coupled to the cross frame.

7. The battery pack of any of claims 5 or 6, wherein the cell stack opposes the lower frame in a state in which lower portions of the plurality of battery cells are exposed.

8. The battery pack of any of claims 1 to 7,
wherein the at least one battery module includes:
a busbar assembly electrically connected to the cell stack and having a terminal unit disposed thereon; and
a side cover opposing the busbar assembly and having a venting hole disposed therein, and
wherein the venting hole is configured to discharge gas generated from the cell stack.

9. The battery pack of claim 8, wherein the venting hole opposes the cross frame and communicates with the venting passage.

10. The battery pack of any of claims 8 or 9,
wherein the at least one battery module further includes a sensing unit disposed on the busbar assembly, and
wherein the upper cover further includes an opening through which the terminal portion and the sensing unit are exposed.

11. The battery pack of claim 10, further comprising:
a shielding member coupled to an upper portion of the flange portion and covering the opening.

12. The battery pack of claim 11, further comprising:
a fastening member penetrating through the shielding member and the flange portion and fastened to the cross frame.

13. The battery pack of any of claims 8 to 12,
wherein the at least one battery module includes:
an end cover opposing at least one side of the cell stack, and
wherein the side cover is coupled to an end of the end cover.

14. The battery pack of claim 13, wherein the upper cover is coupled to the end cover and the side cover.

15. The battery pack of any of claims 1 to 4, wherein the pack housing includes a cross frame dividing the internal space into a plurality of accommodating spaces, and
the upper cover is coupled to the cross frame and covering at least one of the plurality of accommodation spaces.
